# EUROPÄISCHE PATENTSCHRIFT

(11) **EP 0 603 196 B1**
(45) Veröffentlichungstag und Bekanntmachung des Hinweises auf die Patenterteilung: **24.04.1996**
(21) Anmeldenummer: 92914488.9
(22) Anmeldetag: 30.06.1992
(51) Int. Cl.: G06F 7/60, G05B 13/02

(54) **FUZZY LOGIC CONTROLLER MIT OPTIMIERTER SPEICHERORGANISATION**
FUZZY LOGIC CONTROLLER WITH OPTIMISED STORAGE ORGANISATION
REGISSEUR A LOGIQUE FLOUE AVEC ORGANISATION OPTIMISEE DE LA MEMOIRE

(30) Priorität: 11.09.1991 DE 4130212
(43) Veröffentlichungstag der Anmeldung: 29.06.1994
(73) Patentinhaber: SIEMENS AKTIENGESELLSCHAFT, D-80333 München (DE)
(72) Erfinder: EICHFELD, Herbert, D-80538 München (DE); LÖHNER, Michael, D-81735 München (DE)
(86) Internationale Anmeldenummer: DE9200540
(87) Internationale Veröffentlichungsnummer: WO9305471

(56) Entgegenhaltungen:
- EP-A- 0 471 843
- FR-A- 2 635 884
- PATENT ABSTRACTS OF JAPAN vol. 012, no. 363 (P-764)29. September 1988

## Beschreibung

Die vorliegende Erfindung betrifft einen Fuzzy Logic Controller (Controller für unscharfe Logik) nach dem Oberbegriff des Patentanspruchs 1.

Ein Fuzzy Logic Controller der gattungsgemäßen Art ist beispielsweise aus der Veröffentlichung von Watanabe mit dem Titel "A VLSI Fuzzy Logic Controller with Reconfigurable, Cascadable Architecture" aus dem IEEE Journal of Solid-State Circuits, Vol. 25, No. 2, April 1990, Seite 376 bis 382, bekannt. Dabei handelt es sich um einen Fuzzy Logic Controller, der gegebenenfalls einen on-chip-Speicher besitzt, wobei der on-chip-Speicher relativ viel Speicherplatz und damit Chipfläche benötigt.

Der Erfindung liegt nun die Aufgabe zugrunde, einen Fuzzy Logic Controller anzugeben, der aufgrund seiner Logik eine optimierte Speicherorganisation gestattet und dadurch weniger Speicherplatz erforderlich ist. Diese Aufgabe wird erfindungsgemäß durch die im kennzeichnenden Teil des Patentanspruchs 1 angegebenen Merkmale gelöst.

Der mit der Erfindung erzielbare Vorteil liegt insbesondere darin, daß aufgrund des geringen Speicherbedarfs die benötigten Speicher problemlos auf den Halbleiterchips des Fuzzy Logic Controllers realisierbar sind.

Die Ansprüche 2 bis 4 sind auf bevorzugte Ausbildungen des Fuzzy Logic Controllers gerichtet.

Die Erfindung wird nachfolgend anhand der Zeichnung näher erläutert. Dabei zeigt
- Figur 1: ein Schaltbild eines erfindungsgemäßen Fuzzy Logic Controllers,
- Figur 2a bis 2d: Eingangs- Zugehörigkeitsfunktionen, Nummern für die Eingangs-Zugehörigkeitsfunktionen und Teile von Zugehörigkeitsfunktionen, bei einem Fuzzy Logic Controller gemäß Figur 1 und
- Figur 3: ein Diagramm zur Darstellung des Speicherplatzbedarfs in Abhängigkeit von der Zahl der Eingänge, für verschiedene Fuzzy Controller.

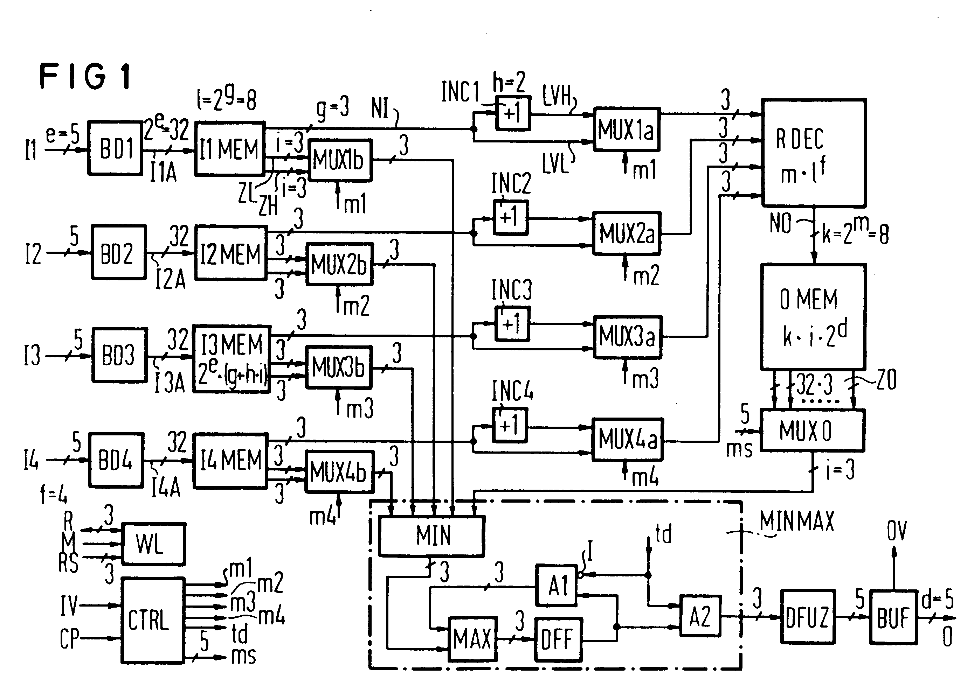

In Figur 1 ist ein erfindungsgemäßer Fuzzy Logic Controller mit f = 4 Eingängen für Eingangssignale I1 ... I4 und einem Ausgang für ein Ausgangssignal 0 dargestellt, wobei die Eingänge eine Eingangsauflösung e = 5 und der Ausgang eine Ausgangsauflösung d = 5 Bit aufweisen. Der Eingang für das Signal I1 ist mit Eingängen einer Puffer/Dekodierschaltung BD1 verbunden, die ausgangsseitig 2^{e} = 32 Adressen für einen Eingangsspeicher I1MEM liefert. Im Eingangsspeicher I1MEM sind Nummern NI linguistischer Werte eines Eingangssignals I1, erste Teile ZL von Eingangs-Zugehörigkeitsfunktionen des Eingangssignals I1 und weitere Teile ZH von Eingangs-Zugehörigkeitsfunktionen des Eingangssignals I1 speicherbar. Die Auflösung der Teile ZL und ZH der Eingangs-Zugehörigkeitsfunktionen beträgt dabei i = 3 Bit. Die am Ausgang des Eingangsspeichers I1MEM verfügbaren Nummern NI sind dabei jeweils für einen ersten betroffenen linguistischen Wert LVL von I1 direkt und Nummern für weitere betroffene linguistische Werte LVH von I1 über eine Inkrementiereinrichtung INC1 Eingängen eines Nummern-Multiplexers MUX1a zuführbar und durch diesen alternativ in Abhängigkeit eines jeweiligen Multiplexersteuersignals m1 auf einen jeweiligen Eingang eines Regeldecoders RDEC durchschaltbar. Beträgt der Überlappungsgrad der Eingangs-Zugehörigkeitsfunktionen von I1, wie in Figur 1 und 2a dargestellt, h = 2, so wird eine Nummer des weiteren betroffen linguistischen Wertes LVH in der Inkrementiereinrichtung INC1 zu NI + 1. Der Nummern-Multiplexer MUX1a besteht in diesem Fall aus einem 1 aus 2-Multiplexer und das Multiplexeransteuersignal m1 ist in diesem Fall nur ein Bit breit. An weiteren Ausgängen des Eingangsspeichers I1 sind die ersten Teile ZL und h - 1 = 1 weitere Teile ZH der Eingangs-Zugehörigkeitsfunktionen verfügbar und einem Zugehörigkeitsfunktions-Multiplexer MUX1b zuführbar. Der Zugehörigkeitsfunktions-Multiplexer MUX1b besteht in diesem Fall ebenfalls aus einem 1 aus 2-Multiplexer, der ebenso durch das Multiplexersteuersignal m1 ansteuerbar ist. Ein Ausgang der Zugehörigkeitsfunktions-Multiplexer MUX1b ist mit einem Eingang einer Minimum/Maximum-Schaltung MINMAX verbunden. In entsprechender Weise sind die Eingänge für die Eingangssignale I2 ... 14 über Puffer/ Dekoderschaltungen BD2 ... BD4 und Eingangsspeicherschaltungen I2MEM ... I4MEM, durch Inkrementierschaltungen INC2 ... INC4 und Nummern-Multiplexer MUX2a ... MUX4a mit dem Regeldekoder RDEC und durch Zugehörigkeitsfunktions-Multiplexer MUX2b ... MUX4b mit Eingängen der Minimum/ Maximum-Schaltung verbunden. Der Regeldekoder RDEC besteht meist aus einer festen Verdrahtung, kann jedoch zur Erhöhung der Flexiblität aus einem Speicher in Form eines RAMs oder PROMs etc. bestehen. Durch den Regeldekoder RDEC sind Nummern NO linguistischer Werte des Ausgangssignals in Form von Adressen für einen nachgeschalteten Ausgangsspeicher OMEM bildbar. Mit Hilfe eines Ausgangsmultiplexers MUX0 ist aus 2^{d} = 32, drei Bit breiten Speicherausgängen, durch ein fünf Bit breites Multiplexersteuersignal ms jeweils nacheinander ein drei Bit breites Ausgangssignal auswählbar und einem Eingang der Minimum/Maximum-Schaltung zuführbar. Die Speicherkapazität eines Eingangsspeichers I1MEM beträgt hier pro Eingang 2^{e} ∗ (g + h ∗ i) = 2⁵ ∗ (3 + 2 ∗ 3) = 288 Bit. Bei k = 8 linguistischen Werten eines Ausgangssignals beträgt die Speicherkapazität des Ausgangsspeichers OMEM k ∗ i ∗ 2^{d} = 8 ∗ 3 ∗ 2⁵ = 768 Bit. Wird der Regeldekoder RDEC, wie eingangs erwähnt, in Form eines Speichers implementiert, so ergibt sich die Speicherkapazität aus m ∗ l^{s} = 3 ∗ 8⁴ = 12.288 Bit, wobei m die Auflösung der k = 8 linguistischen Werte der Ausgangssignals und 1 = 8 linguistische Werte des Eingangssignals bedeuten.

Die Minimum/Maximum-Schaltung MINMAX besitzt f + 1 Eingänge die mit Ausgängen der Zuordnungsfunktions-Multiplexer MUX1b ... MUX4b und dem Ausgang des Ausgangsmultiplexers MUX0 verbunden sind und gleichzeitig Eingänge einer Minimum-Verknüpfung MIN darstellen. Ein Ausgang der Minimum-Verknüpfung MIN ist mit einem ersten Eingang einer Maximum-Verknüpfung MAX verbunden und ein Ausgangssignal der Maximum-Verknüpfung ist über ein D-Flip-Flop DFF verzögerbar und anschließend über ein erstes UND-Gatter A1 entweder einem zweiten Eingang der Maximum-Verknüpfung MAX oder über ein zweites UND-Tor A2 einer Defuzzifikationsschaltung DFUZ zuführbar. Das UND-Tor A1 ist dabei über einen Inverter I und das zweite UND-Tor direkt durch ein Defuzzifikations-Taktsignal td ansteuerbar. Die Defuzzifikationsschaltung DFUZ arbeitet beispielsweise nach dem meist üblichen Schwerpunktverfahren und ist ausgangsseitig mit einem Eingang eines Ausgangspuffers beschaltet, der das Ausgangssignal 0 und ein Signal OV zur Bestätigung eines gültigen Ausgangssignals liefert. Ferner weist der erfindungsgemäße Fuzzy Logic Controller eine Schreib/Lese-Logik WL auf, die durch ein Signal M aktivierbar ist und ein Schreiben bzw. Lesen der Zugehörigkeitsfunktionen in bzw. aus den Eingangsspeichern I1MEM ... I4MEM und im Ausgangsspeicher OMEM durch einen bidirektionalen Regelbus R ermöglicht. Mit Hilfes eines Regelauswahlsignals sind Speicherbereiche der Eingangsspeicher und des Ausgangsspeichers adressierbar, wodurch Nummern NI und Teile von Zugehörigkeitsfunktionen ZL, ZH von Eingangssignalen neben Zugehörigkeitsfunktionen des Ausgangssignals auf den Regelbus R schreib- bzw. lesbar sind. In einer Steuereinheit CTRL sind aus einem Signal IV zur Bestätigung gültiger Eingangssignale und einem Taktsignal CP die Multiplexersteuersignale m1 ... m4, das Steuersignal ms für den Ausgangsmultiplexer und das Defuzzifikations-Taktsignal td bildbar.

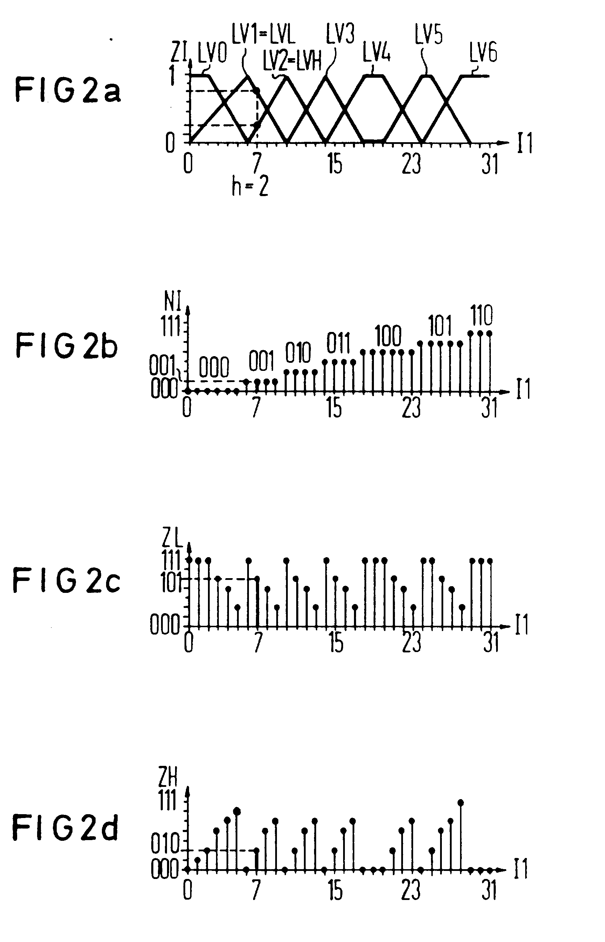

Sobald das Signal IV zur Bestätigung gültiger Eingangssignale vorliegt, werden aus den Signalen an den Eingängen für die Eingangssignale I1 bis I4 am Eingang eines jeden der vier Eingangsspeicher I1MEM ... I4MEM Adressen I1A ... I4A zwischen 0 und 31 gebildet. In Figur 2a sind beispielsweise sieben linguistische Werte LV0 ... LV6 des Eingangssignals I1 mit ihren Zugehörigkeitsfunktionen dargestellt. Bei einem Überlappungsgrad h = 2 sind, für I1 = 7, die linguistischen Variabler LV1 und LV2 betroffen und liefern jeweils einen Zugehörigkeitswert. In diesem Fall ist also der erste betroffene linguistische Wert LVL = LV1 und der weitere betroffene linguistische Wert LVH = LV2. Würde für jeden linguistischen Wert eines Eingangssignals eine zugehörige Eingangs-Zugehörigkeitsfunktion in einem eigenen Speicherbereich abgespeichert, so wären in diesem Beispiel pro Eingangssignal 2^{e} ∗ i ∗ l = 2⁵ ∗ 3 ∗ 8 = 768 Bit für einen Eingangsspeicher nötig. Beim erfindungsgemäßen Fuzzy Logic Controller ist jedoch aufgrund der speziellen Speicherorganisation, wie eingangs dargestellt, wesentlich weniger Speicherplatz erforderlich. Hierzu werden die in Figur 2a dargestellten linguistischen Werte LV0 ... LV6 den Nummern NI, wie in Figur 2b dargestellt, zugeordnet. Die Zuordnung erfolgt dabei so, daß zum Beispiel der linguistische Wert LV0, bei einem Eingangssignal I1 = 0 bis 5, die Nummern NI = 003 annimmt, weil für I1 = 0 bis 5 der Wert der Eingangs-Zugehörigkeitsfunktion Z1 des linguistischen Wertes LV0 größer Null ist. In entsprechender Weise werden auch die linguistischen Werte LV1 bis LV6 den Nummern 001 ... 110 mit einer Auslösung von g = 3 Bit für ein Eingangssignal I1 = 6 bis 31 zugeordnet.

Aus den Eingangs-Zugehörigkeitsfunktionen ZI des Eingangssignals I1 mit dem Überlappungsgrad h = 2 wird ein erster Teil ZL an Zugehörigkeitsfunktionen des Eingangssignals I1 und h - 1 = 1 weitere Teile ZH von Zugehörigkeitsfunktionen des Eingangssignals I1 mit einer Auflösung i = 5 Bit gebildet, wobei der erste Teil ZL und der weitere Teil ZH überlappungsfrei sind. Die Werte für ZL und ZH werden dabei so zugeordnet, daß beispielsweise ein Eingangssignal I1 = 7 mit Hilfe der Zuordnungsfunktion der linguistischen Variablen LV1, die den ersten betroffenen linguistischen Wert LVL darstellt, gebildet und der Wert von beispielsweise 101 an der Adresse I1A = 7 im Speicherbereich für den ersten Teil ZL, wie in Figur 2c dargestellt, eingetragen. Entsprechend wird bei der Adresse I1A = 7 mit Hilfe des linguistischen Wertes LV2, der den weiteren betroffenen linguistischen Wert LVH darstellt, beispielsweise ein Wert 010 gebildet und, wie in Figur 2d dargestellt, einem Speicherbereich für den weiteren Teil ZH zugeordnet. In diesem Beispiel mit h = 2 ist also der Speicherbereich für den ersten Teil ZL mit den konstanten bzw. fallenden Teilen der Eingangs-Zugehörigkeitsfunktionen ZI des Eingangssignals I1 und der weitere Teil ZH mit den ansteigenden Teilen der Eingangs-Zugehörigkeitsfunktionen ZI des Eingangssignals I1 beschrieben. Im allgemeinen Fall sind bei einem überlappungsgrad h, entsprechend h Speicherbereiche für Teile von Zugehörigkeitsfunktionen ZL, ZH vorzusehen. Um alle f^{h} = 4 = 16 möglichen Kombinationen von betroffenen linguistischen Werten LVL, LVH auszuwerten, werden immer ein Nummern-Multiplexer, beispielsweise MUX1a, und ein Zugehörigkeitsfunktions-Multiplexer, zum Beispiel MUX1b, paarweise nacheinander umgeschaltet, so daß die Nummer NI stellvertretend für den ersten betroffenen linguistischen Wert LVL und die Nummer NI + 1 stellvertretend für den weiteren betroffenen linguistischen Wert LVH zum Regeldekoder RDEC durchgeschaltet wird. Im Regeldekoder RDEC werden aus diesen Nummern, mit den im Regeldekoder gespeicherten Fegeln, Nummern N0 linguistischer Werte des Ausgangssignals in Form von Adressen für den Ausgangsspeicher OMEM gebildet, der dann ähnlich wie bei den Eingangsspeichern einen von 2^{d} = 2⁵ = 32 Ausgangswerten über den Ausgangsmultiplexer MUXO mit einer Auflösung von i = 3 der Minimum-Verknüpfung MIN zuführt. Ist der Wert aus dem Ausgangsmultiplexer MUX0 kleiner als einer der Werte die aus den Zugehörigkeitsfunktions-Multiplexern MUX1b ... MUX4b die ebenfalls der Minimum-Verknüpfung zugeführt werden, so wird dieser Wert und im anderen Fall der jeweilige Wert der Zugehörigkeitsfunktion aus den jeweiligen Zugehörigkeitsfunktions-Multiplexern der Maximum-Verknüpfung MAX zugeführt. Hierdurch wird ein sogenanntes "Abschneiden" der jeweiligen Zugehörigkeitsfunktion bewirkt. Das Defuzzikations-Taktsignal td ist solange Null, bis die Multiplexer MUX1a ... MUX4b durch die Multiplexersteuersignale m1 ... m4 jeweils paarweise einmal umgeschaltet wurden, wodurch das erste UND-Tor A1 geöffnet bleibt und mit Hilfe der Maximum-Verknüpfung MAX und des 0-Flipflops DFF aus allen "abgeschittenen" Zugehörigkeitsfunktionen der Ausgangsvariablen für eine der 32 Ausgangsadressen ein maximaler Wert ermittelbar ist und, sobald das Defuzzifikations-Taktsignal td = 1 wird, über das zweite UND-Tor A2 an die Defuzzifikationsschaltung DFUZ übergebbar ist. Dies wiederholt sich für insgesamt 2^{d} = 2⁵ = 32 Ausgangsadressen und aus diesen 32 Werten wird in der Defuzzifikationsschaltung DFUZ beispielsweise nach dem meist üblichen Schwerpunktverfahren ein Wert ermittelt der anschließend in den Ausgangspuffer BUF übertragen wird und am Ausgang 0 zur Verfügung steht, sobald das Signal 0V zur Bestätigung des gültigen Ausgangssignals vorliegt.

Würde beispielsweise das Eingangssignal I1 linguistische Werte besitzen, deren Eingangs-Zugehörigkeitsfunktionen einen Überlappungsgrad von h = 3 aufweisen, so wären im Eingangsspeicher I1MEM Speicherbereiche für h = 3 Teile von Eingangs-Zugehörigkeitsfunktionen, der Zugehörigkeitsfunktions-Multiplexer MUX1b in Form eines 1 aus 3-Multiplexers mit einem zwei Bit breiten Ansteuersignal ml, eine Inkrementiereinrichtung INC1, die sowohl eine Nummer NI + 1 als auch eine Nummer NI + 2 bildet und ein Nummern-Multiplexer MUX1a in Form eines 1 aus 3-Multiplexers, der ebenfalls durch ein zwei Bit breites Multiplexeransteuersignal ml ansteuerbar ist erforderlich. Es ist außerdem denkbar, daß jedes Eingangssignal unterschiedliche Überlappungsgrade aufweist und/oder daß die Eingangsauflösung e unterschiedlich zur Ausgangsauflösung d ist.

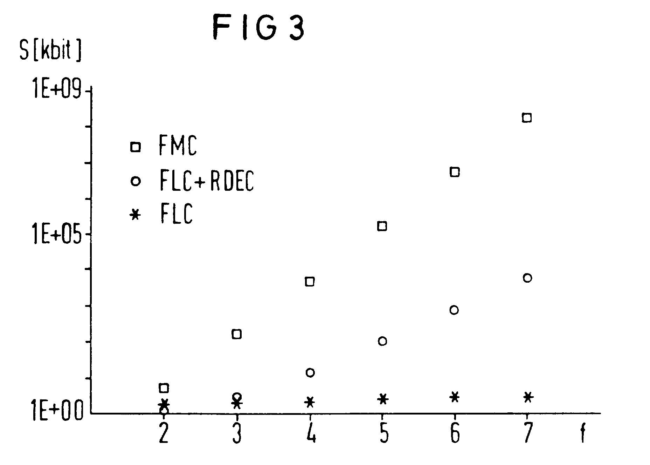

In Figur 3 ist abschließend in einem vergleichenden Diagramm die erforderliche Speicherkapazität S in Kilobit in Abhängigkeit von der Anzahl der Eingänge f dargestellt. Es werden dabei ein Fuzzy Memory Controller FMC, ein erfindungsgemäßer Fuzzy Logic Controller mit als Speicher inplementiertem Regeldecoder FLC + RDEC und ein erfindungsgemäßer Fuzzy Logic Controller FLC mit festverdrahtetem Regeldecoder verglichen. Unter einem Fuzzy Memory Controller ist ein Speicher mit f ∗ e = 4 ∗ 5 = 20 Eingangsadressen und einer Ausgangswortbreite d = 5 Bit zu verstehen, dessen Speicherkapazität im Beispielfall S = d ∗ 2^{f}*^{e} = 5 ∗ 2⁴*⁵ = etwa 5 Megabit beträgt. Selbst wenn der Regeldekoder RDEC als Speicher implementiert ist zeigt sich, insbesondere bei einer größeren Anzahl von Eingängen, ein um einige Größenordnungen geringerer Speicherbedarf S als bei einem Fuzzy Memory Controller FMC. Ist der Regeldekoder fest verdrahtet, so ergibt sich ein extrem geringer Speicherplatzbedarf S auch für eine große Anzahl von Eingängen, da der Speicherplatzbedarf S nur linear von der Anzahl der Eingänge abhängt.

Aufgrund des geringen Speicherplatzbedarfs, insbesondere bei fest verdrahtetem Regeldekoder RDEC, sind erfindungsgemäße Fuzzy Logic Controller mit on-chip-Speichern für sich, aber auch als Zusatz für konventionelle Mehrzweck-Controller relativ leicht herstellbar.

## Patentansprüche

1. Fuzzy Logic Controller mit einem Regelspeicher zur Fuzzifizierung, einem Regeldekoder (RDEC) und einer Minimum/Maximum-Schaltung (MINMAX) zur Inferenzbildung und einer der Minimum/Maximum-Schaltung nachgeschalteten Defuzzifikationsschaltung (DFUZ),
**dadurch gekennzeichnet**,
daß der Regelspeicher aus f Eingangsspeichern (I1MEM ... I4MEM) und einem Ausgangsspeicher (OMEM) besteht, daß jeweils ein Eingangssignal (I1 ... I4) über eine jeweilige Puffer/Dekodierschaltung (BD1 ... BD4) einem jeweiligen Eingang eines Eingangsspeichers (I1MEM ... I4MEM) zugeführt ist, wobei die Eingangssignale eine Eingangsauflösung e besitzen und durch die Puffer/Dekodierschaltungen jeweils 2^{e} Adressen (I1A ... I4A) für den jeweiligen Eingangsspeicher gebildet sind, daß in den jeweiligen Eingangsspeichern eine Nummer (NI) für einen jeweiligen frei wählbaren Adreßbereich eines jeweiligen aus mehreren linguistischen Werten bestehenden Eingangssignals und Funktionswerte einer ersten und h - 1 weiteren Eingangs-Zugehörigkeitsfunktionen (ZL, ZH) des jeweiligen Adreßbereichs gespeichert sind, wobei h den Überlappungsgrad der Eingangs-Zuordnungsfunktionen (ZI) darstellt, daß jeweils die Nummer für einen ersten von dem ausgewählten Adreßbereich betroffenen linguistischen Wert (LVL) eines jeweiligen Eingangssignals direkt und Nummern für weitere von den ausgewählten Adreßbereichen betroffene linguistische Werte (LVH) über eine jeweilige Inkrementiereinrichtung (INC1) Eingängen eines jeweiligen Nummern-Multiplexers (MUX1a) zugeführt und durch diesen nacheinander in Abhängigkeit eines jeweiligen Multiplexersteuersignals (zum Beispiel m1) auf einen jeweiligen Eingang des Regeldekoders (RDEC) durchgeschaltet sind, daß nacheinander in Abhängigkeit des jeweiligen Multiplexersteuersignals (zum Beispiel m1) für einen jeweiligen Zugehörigkeitsfunktions-Multiplexer (MUX1b) die die Funktionswerte einer ersten und von h - 1 weiteren Eingangs-Zugehörigkeitsfunktionen (ZL, ZH) einer Minimum-Verknupfung (MIN) der Minimum/Maximum-Schaltung zugeführt sind und daß durch die im Regeldekoder gespeicherten Regeln aus den Nummern für die betroffenen linguistischen Werte des Eingangssignals (I1 ... I4) Nummern (NO) für linguistische Werte eines Ausgangssignals zugeordnet sind und diese Nummern als Adressen für einen nachgeschalteten Ausgangsspeicher (OMEM) dienen, der Werte für Zugehörigkeitsfunktionen des Ausgangssignals enthält und der seinerseits mit einem Ausgang über einen Ausgangsmultiplexer (MUXO) eingangsseitig mit der Minimum-Verknüpfung (MIN) der Minimum/Maximum-Schaltung (MINMAX) verbunden ist.

2. Fuzzy Logic Controller nach Anspruch 1
**dadurch gekennzeichnet**,
daß der Überlappungsgrad h = 2 beträgt, daß sowohl die Nummern-Multiplexer ((MUX1a ... MUX4a) als auch die Zugehörigkeitsfunktions-Multiplexer (MUX1b ... MUX4b) in Form von 1 aus 2-Multiplexern ausgebildet sind und die Multiplexersteuersignale (m1 ... m4) jeweils nur ein Bit breit sind und daß in den Inkrementiereinrichtungen (INC1 ... INC4) jeweils aus der Nummer (NI) für den ersten von dem ausgewählten Adreßbereich betroffenen linguistischen Wert (LVL) des jeweiligen Eingangssignals (I1) durch Addition einer Eins jeweils lediglich eine Nummer (N1 + 1) für einen weiteren von dem ausgewählten Adreßbereich betroffenen linguistischen Wert (LVH) des jeweiligen Eingangssignals (I1) gebildet ist.

3. Fuzzy Logic Controller nach Anspruch 1 oder 2,
**dadurch gekennzeichnet**,
daß die Minimum/Maximum-Schaltung f + 1 Eingänge besitzt, die gleichzeitig die Eingänge einer Minimum-Verknüpfung (MIN) darstellen und daß ein Ausgang der Minimum-Verknüpfung mit einem ersten Eingang einer Maximum-Verknüpfung (MAX) verbunden ist und ein Ausgangssignal der Maximum-Verknüpfung über ein D-Flipflop (DFF) verzögert und anschließend über ein erstes UND-Tor (A1) einem zweiten Eingang der Maximum-Verknüpfung (MAX) oder über ein zweites UND-Tor (A2) der Defuzzifikationsschaltung (DFUZ) zugeführt ist.

4. Fuzzy Logic Controller nach einem der Ansprüche 1 bis 3,
**dadurch gekennzeichnet**,
daß der Regeldekoder (RDEC) in Form eines Speichers ausgeführt ist.

5. Fuzzy Logic Controller nach einem der Ansprüche 1 bis 4,
**dadurch gekennzeichnet**,
daß er sich zusammen mit dem Regel speicher auf einem gemeinsamen Halbleiter-Chip befindet.

6. Fuzzy Logic Controller nach einem der Ansprüche 1 bis 5,
**dadurch gekennzeichnet**,
daß er sich zusammen mit einem konventionellen Mehrzweck-Controller auf einem gemeinsamen Halbleiter-Chip befindet.

## Claims

1. Fuzzy logic controller having a regulating memory for fuzzification, a regulating decoder (RDEC) and a minimum/maximum circuit (MINMAX) for inference formation and a defuzzification circuit (DFUZ) downstream of the minimum/maximum circuit, characterized in that the regulating memory comprises f input memories (I1MEM ... I4MEM) and an output memory (OMEM), in that in each case an input signal (I1 ... I4) fed via a respective buffer/decoding circuit (BD1 ... BD4) to a respective input of an input memory (I1MEM ... I4MEM), the input signals having an input resolution e and there being formed by the buffer/decoding circuits in each case 2^{e} addresses (I1A ... I4A) for the respective input memory, in that a number (NI) for a respective freely selectable address range of a respective input signal, comprising a plurality of linguistic values, and function values of a first and h - 1 further input relevance functions (ZL, ZH) of the respective address range are stored in the respective input memories, h representing the degree of overlap of the input assignment functions (ZI), in that in each case the number for a first relevant linguistic value (LVL), from the selected address range, of a respective input signal is fed directly and numbers for further relevant linguistic values (LVH), from the selected address ranges, are fed via a respective incrementing device (INC1) to inputs of a respective number multiplexer (MUX1a) and are switched through by the latter successively in dependence on a respective multiplexer control signal (for example m1) to a respective input of the regulating decoder (RDEC), in that successively the function values of a first and of h - 1 further input relevance functions (ZL, ZH) are fed in dependence on the respective multiplexer control signal (for example m1) for a respective relevance function multiplexer (MUX1b) to a minimum operation (MIN) of the minimum/maximum circuit and in that numbers (NO) for linguistic values of an output signal are assigned by the rules stored in the regulating decoder from the numbers for the relevant linguistic values of the input signal (I1 ... I4) and these numbers serve as addresses for a downstream output memory (OMEN), which contains values for relevance functions of the output signal and which for its part is connected by an output via an output multiplexer (MUXO) on the input side to the minimum operation (MIN) of the minimum/maximum circuit (MINMAX).

2. Fuzzy logic controller according to Claim 1, characterized in that the degree of overlap is h = 2, in that both the number multiplexers (MUx1a ... MUX4a) and the relevance function multiplexers (mux1b ... MUX4b) are designed in the form of 1-of-2 multiplexers and the multiplexer control signals (m1 ... m4) are in each case only one bit wide and in that in the incrementing devices (INC1 ... INC4) there is respectively formed from the number (NI) for the first relevant linguistic value (LVL) from the selected address range of the respective input signal (I1), by addition of a one, in each case merely a number (NI + 1) for a further relevant linguistic value (LVH) from the selected address range of the respective input signal (I1).

3. Fuzzy logic controller according to Claim 1 or 2, characterized in that the minimum/maximum circuit has f + 1 inputs, which at the same time represent the inputs of a minimum operation (MIN) and in that one output of the minimum operation is connected to a first input of a maximum operation (MAX) and an output signal of the maximum operation is delayed by means of a delay flipflop (DFF) and subsequently is fed via a first AND gate (A1) to a second input of the maximum operation (MAX) or via a second AND gate (A2) to the defuzzification circuit (DFUZ).

4. Fuzzy logic controller according to one of Claims 1 to 3, characterized in that the regulating decoder (RDEC) is constructed in the form of a memory.

5. Fuzzy logic controller according to one of Claims 1 to 4, characterized in that it is located together with the regulating memory on a common semiconductor chip.

6. Fuzzy logic controller according to one of Claims 1 to 5, characterized in that it is located together with a conventional multi-purpose controller on a common semiconductor chip.

## Revendications

1. Régisseur à logique floue comportant une mémoire de règles pour l'activation de la logique floue, un décodeur de règles (RDEC) et un circuit de minimum/maximum (MINMAX), destiné à former des inférences, et un circuit de minimum/maximum de désactivation de la logique floue (DFUZ) monté en aval du circuit minimum/maximum, caractérisé en ce que la mémoire de règles se compose de f mémoires d'entrée (I1MEM ... I4MEM) et d'une mémoire de sortie (OMEM), en ce qu'un signal d'entrée (I1 ... I4) est chaque fois acheminé via un circuit tampon / de décodage (BD1 ... BD4) vers une entrée correspondante d'une mémoire d'entrée (I1MEM ... I4MEM), les signaux d'entrée présentant une résolution d'entrée e et les différents circuits tampons / de décodage servant à former à chaque fois 2^{e} adresses (I1A ... I4A) pour la mémoire d'entrée correspondante, en ce qu'un numéro (NI) destiné à une plage d'adresses librement sélectionnable d'un signal d'entrée composé de plusieurs valeurs linguistiques et des valeurs de fonctions d'une première fonction d'appartenance des entrées et de h - 1 autres fonctions d'appartenance des entrées (ZL, ZH) de la plage d'adresses correspondante sont mémorisés dans les mémoires d'entrée respectives, où h représente le degré de recouvrement des fonctions d'assignation des entrées (ZI), en ce que le numéro d'une première valeur linguistique (LVL) d'un signal d'entrée concernée par la plage d'adresses sélectionnée est acheminé directement vers des entrées d'un multiplexeur de numéros (MUX1a) correspondant et en ce que les numéros d'autres valeurs linguistiques (LVH) concernées par les plages d'adresses sélectionnées sont acheminés par l'intermédiaire d'un dispositif d'incrémentation (INC1) correspondant vers des entrées d'un multiplexeur de numéros (MUX1a) correspondant et sont transmis successivement par celui-ci en fonction d'un signal de commande de multiplexeur correspondant (par exemple m1) à une entrée correspondante du décodeur de règles (RDEC), en ce que, successivement et en fonction du signal de commande du multiplexeur correspondant (par exemple m1) pour un multiplexeur de fonctions d'appartenance correspondant (MUX1b), les valeurs des fonctions d'une première fonction d'appartenance des entrées et de h - 1 autres fonctions d'appartenance des entrées (ZL, ZH) sont acheminées vers une opération de minimum (MIN) du circuit de minimum/maximum et en ce que des numéros (NO) destinés à des valeurs linguistiques d'un signal de sortie sont assignés par les règles mémorisées dans le décodeur de règles à partir des numéros destinés aux valeurs linguistiques concernées du signal d'entrée (I1 ... I4) et en ce que ces numéros servent d'adresses pour une mémoire de sortie (OMEM) montée en aval, qui contient des valeurs de fonctions d'appartenance du signal de sortie, et dont une sortie est, via un multiplexeur de sorties (MUXO) reliée, côté entrée, à l'opération de minimum (MIN) du circuit de minimum/maximum (MINMAX).

2. Régisseur à logique floue selon la revendication 1, caractérisé en ce que le degré de recouvrement s'élève à h = 2, en ce que tant les multiplexeurs de numéros (MUX1a ... MUX4a) que les multiplexeurs de fonctions d'appartenance (MUX1b ... MUX4b) sont conformés comme des multiplexeurs 1 de 2 et en ce que les signaux de commande des multiplexeurs (m1 ... m4) ne présentent respectivement qu'une largeur d'un bit et en ce que, dans les dispositifs d'incrémentation (INC1 ... INC4), on ne forme chaque fois, à partir du numéro (NI) destiné à la pemière valeur linguistique (LVL) du signal d'entrée correspondant (Il) concernée par la plage d'adresses sélectionnée en y additionnant un UN, qu'un numéro (N1 + 1) destiné à une autre valeur linguistique (LVH) du signal d'entrée correspondant (I1) concernée par la plage d'adresses sélectionnée.

3. Régisseur à logique floue selon la revendication 1 ou 2, caractérisé en ce que le circuit de minimum/maximum possède f + 1 entrées, qui constituent simultanément les entrées d'une opération de minimum (MIN) et en ce qu'une sortie de l'opération de minimum est reliée à une première entrée d'une opération de maximum (MAX) et en ce qu'un signal de sortie de l'opération de maximum est temporisée par une bascule de type D (DFF) avant d'être acheminé via une première porte ET (A1) vers une deuxième entrée de l'opération de maximum (MAX) ou via une deuxième porte ET (A2) au circuit de désactivation de la logique floue (DFUZ).

4. Régisseur à logique floue selon l'une des revendications 1 à 3, caractérisé en ce que le décodeur de règles (RDEC) est réalisé sous la forme d'une mémoire.

5. Régisseur à logique floue selon l'une des revendications 1 à 4, caractérisé en ce qu'il se trouve sur une même puce de semiconducteur que la mémoire des règles.

6. Régisseur à logique floue selon l'une des revendications 1 à 5, caractérisé en ce qu'il se trouve sur une même puce de semiconducteur qu'un contrôleur polyvalent traditionnel.
